# EUROPÄISCHE PATENTANMELDUNG

(11) **EP 0 546 594 A2**
(43) Veröffentlichungstag der Anmeldung: **16.06.1993**
(21) Anmeldenummer: 92203500.1
(22) Anmeldetag: 16.11.1992
(51) Int. Cl.: C25B 11/20, H01M 4/86

(54) **Membran für eine Gasdiffusionselektrode, Verfahren zur Herstellung der Membran und gasdiffusionselektrode mit Membran**

(30) Priorität: 12.12.1991 DE 4140972
(71) Anmelder: METALLGESELLSCHAFT Aktiengesellschaft, D-60015 Frankfurt (DE)
(72) Erfinder: Hillrichs,Eilhard, Dr., W-6470 Büdingen (DE); Sander, Ulrich, Dr., W-6382 Friedrichsdorf (DE)

(57) **Zusammenfassung**

Die Membran dient zum Abdecken der einem flüssigen Elektrolyten zugewandten Außenseite einer Gasdiffusionselektrode. Die Membran ist gasundurchlässig und wasseraufnahmefähig, sie weist eine textile Trägerschicht auf. Mit der textilen Trägerschicht ist mindestens eine Gassperrschicht verbunden, die lonenaustauschermaterial und Bindersubstanz im Gewichtsverhältnis von 10:1 bis 1:2 enthält. Bei der Herstellung der Membran bringt man auf die textile Trägerschicht eine lösungsmittelhaltige Bindersubstanz als Klebeschicht und darauf mindestens eine Gassperrschicht auf.

## Beschreibung

Die Erfindung betrifft eine Membran zum Abde ken der einem flüssigen Elektrolyten zugewandten Außenseite einer Gasdiffusionselektrode, wobei die Membran gasundurchlässig und wasseraufnahmefähig ist und eine textile Trägerschicht aufweist. Die Erfindung betrifft ferner ein Verfahren zur Herstellung dieser Membran sowie eine Gasdiffusionselektrode mit einer solchen Membran.

In der EP-A-0 345 864 wird eine Membran dieser Art und ihre Herstellung beschrieben. Diese bekannte Membran besteht im wesentlichen aus einer textilen Trägerschicht, die mit einem Polymer getränkt ist, welches sich in Wasser zu einem Hydrogel entwickelt. Sowohl das Polymer als auch das Hydrogel haben keine lonenaustauscheigenschaften. Einzelheiten über den Aufbau und den Betrieb von Gasdiffusionselektroden sind ferner in den US-Patentschriften 4 293 396 und 4 614 575 sowie dem Europa-Patent 0 026 995 erläutert.

Der Erfindung liegt die Aufgabe zugrunde, eine Membran der eingangs genannten Art zu schaffen, die in der Anwendung über lange Zeit Stabilität und Gasdichtigkeit besitzt und dabei auch Elektrolyteinbrüche in den Innenbereich der Gasdiffusionselektrode vermeidet. Erreicht wird dies erfindungsgemäß dadurch, daß mit der textilen Trägerschicht der Membran mindestens eine Gassperrschicht verbunden ist, die lonenaustauschermaterial und Bindersubstanz im Gewichtsverhältnis von 10:1 bis 1:2 enthält.

Bei der Herstellung der Membran bringt man auf die textile Trägerschicht eine lösungsmittelhaltige Bindersubstanz als Klebeschicht und darauf mindestens eine Gassperrschicht auf, wobei die Gassperrschicht aus lonenaustauschermaterial und Bindersubstanz im Gewichtsverhältnis von 10:1 bis 1:2 besteht. Die erfindungsgemäße Gasdiffusionselektrode, die in verschiedenartigen Elektrolysevorrichtungen eingesetzt werden kann, weist die bereits charakterisierte Membran auf ihrer dem Elektrolyten zugewandten Außenseite auf.

Das lonenaustauschermaterial der Gassperrschicht kann Kationenaustauscheigenschaften oder Anionenaustauscheigenschaften besitzen. Anoden werden üblicherweise mit Membranen mit Kationenaustauscheigenschaften versehen. Überwiegend werden Kathoden mit Membranen mit Anionenaustauscheigenschaften ausgerüstet, doch kann man bei Anwendung eines sauren Elektrolyten für Kathoden auch Membranen mit Kationenaustauscheigenschaften einsetzen.

Bei der Herstellung der Membranen kann man das Kationen- bzw. Anionenaustauschermaterial z.B. aus folgenden Materialien auswählen: Das Kationenaustauschermaterial besteht vorzugsweise aus vernetztem Polymer mit aktiven Sulfonsäure-oder Carboxylgruppen. Anionenaustauschermaterial besteht vorzugsweise aus vernetztem Polymer mit aktiven Amingruppen. Diese kommerziell erhältlichen Materialien werden als Pulver mit Korngrößen etwa im Bereich von 1 bis 50 um vorgelegt und mit der Bindersubstanz möglichst homogen gemischt. Als Bindersubstanzen eignen sich z.B. elektrolytbeständige Polymere wie Polyvinylidendifluorid (PVDF), Polyhydantoin (PHD) oder Polysulfon. Die Bindersubstanz enthält zunächst beim Mischen mit dem pulverförmigen lonenaustauschermaterial ein flüssiges Lösungsmittel oder einen Verdünner wie z.B. Dimethylacetamid (DMA) oder N-Methylpyrolidon (NMP) oder aushärtbare Reaktanden, wie man sie bei Epoxidharzen verwendet. In der zunächst flüssigen Mischung kann der Lösungsmittelanteil bei etwa 50 bis 80 Gew.% liegen.

In der ausgehärteten Membran liegt das Gewichtsverhältnis von lonenaustauschermaterial und Bindersubstanz im Bereich von 10:1 bis 1:2 und vorzugsweise 8:1 bis 1:1. Die Aushärtung erfolgt üblicherweise bei erhöhten Temperaturen im Bereich von 50 bis 150°C.

Die Gassperrschicht der Membran kann in ihrer Wirksamkeit vor allem bezüglich der Wasserdurchlässigkeit dadurch verbessert werden, daß man Ruß und/oder feinteiliges Si0₂ zusetzt. Bezogen auf die ausgehärtete Bindersubstanz liegt der empfehlenswerte Rußanteil in der Gassperrschicht bei 1 bis 20 Gew.% und der Anteil an feinpulverigem Si0₂ bei 0,5 bis 7 Gew.%.

Zum Erhöhen ihrer Stabilität kann man der Gassperrschicht auch Polymerfasern oder Glasfasern beimischen. Diese Fasern geben der Gassperrschicht zusätzlich eine gewisse Elastizität. Der Gewichtsanteil der Polymer- oder Glasfasern in der Gassperrschicht wird bevorzugt im Bereich von 0,1 bis 5 % liegen.

Für die zur Membran gehörende textile Trägerschicht eignen sich Gewebe, Gewirke oder Vliese. Das Faden- oder Fasermaterial der Trägerschicht kann in an sich bekannter Weise aus Polyester, Polypropylen, Polyphenylensulfid, Glas, Kohlenstoff oder auch Metall bestehen.

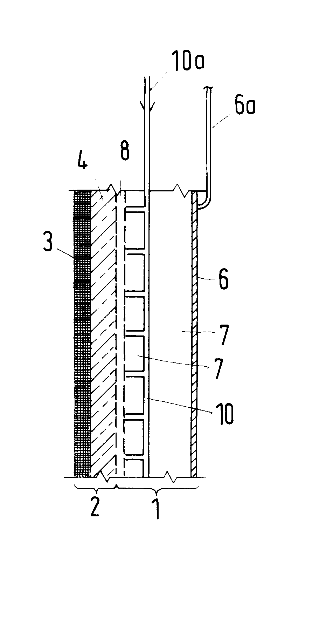

Weitere Möglichkeiten des Aufbaus der Membran, ihrer Herstellung und des Aufbaus der damit ausgerüsteten Gasdiffusionselektroden werden mit Hilfe der Zeichnung erläutert. Sie zeigt einen stark vergrößerten Schnitt durch eine teilweise dargestellte Gasdiffusionselektrode.

Die Gasdiffusionselektrode besteht aus dem Elektrodenkörper (1) und der damit verbundenen Membran (2), die mit dem flüssigen Elektrolyten in Kontakt steht. Die Hauptteile der Membran sind die textile Trägerschicht (3) und die damit verbundene Gassperrschicht (4).

Zum Elektrodenkörper (1) gehören eine Stromverteilungsschicht (6) mit einem Anschluß (6a) für den elektrischen Strom, eine elektrisch leitende Füllschicht (7) und eine gasdurchlässige Katalysatorschicht (8). Innerhalb der Füllschicht (7) verläuft ein Leitungssystem (10) zum Verteilen eines Gases, welches durch die Leitung (10a) von außen herangeführt und in die Katalysatorschicht (8) hinein verteilt wird. Bei dem Gas kann es sich z.B. um Sauerstoff, Luft oder Wasserstoff handeln.

Die textile Trägerschicht (3), die z.B. aus einem Vlies besteht, ist üblicherweise 0,1 bis 2 mm dick. Die Gassperrschicht (4), die lonenaustauschermaterial enthält, kann auch aus mehreren, übereinander aufgebrachten Schichten zusammengesetzt sein, ihre Dicke liegt üblicherweise im Bereich von 0,02 bis 1 mm. Die Schicht (4) ist gasundurchlässig und muß deshalb frei von Makroporen sein, doch muß sie Wasser aufnehmen können, auch ist sie elektrisch nicht leitend. Wassermoleküle diffundieren durch die Schichten (3) und (4) hindurch bis zur Katalysatorschicht (8). Gleichzeitig wird das Gas durch das Leitungssystem (10) bis zur Katalysatorschicht (8) geleitet. Bei einer Gasdiffusionsanode wird das Gas, z.B. Wasserstoff, in der Katalysatorschicht (8) zu H-Ionen oxidiert, welche dann durch die Membran mit Kationenaustauscheigenschaften in den angrenzenden Elektrolyten wandern. Bei einer Gasdiffusionskathode und bei einem durch das Leitungssystem (10) verteilten 0₂-Gas entstehen an der Katalysatorschicht (8) mit Wasser Hydroxidionen, welche durch die Membran mit Anionenaustauscheigenschaften in den Elektrolyten wandern.

Für die Katalysatorschicht (8) eignet sich z.B. Kohlefaser-Gewebe, das mit Rußpartikeln verklebt ist. Die Rußpartikel können in fein verteilter Form Partikel aus Platin und/oder Ruthenium tragen. Als Kleber kann hierfür z.B. Polytetrafluorethylen verwendet werden.

Solche Katalysatorschichten mit Kohlefasertüchern sind an sich bekannt und z.B. in den US-Patenten 4 293 396 und 4 647 359 beschrieben. Die Katalysatorschicht (8) kann aber auch nur aus einer Schicht aus verklebten Rußpartikeln ohne Kohlenstofftuch bestehen.

Die Füllschicht (7) besteht aus elektrisch leitendem Material, z.B. aus einer ausgehärteten Mischung aus Rußpartikeln und Epoxidharz.

Die Stromverteilungsschicht (6) kann ein Metallnetz oder eine Metallplatte, z.B. aus Blei oder Edelstahl, sein.

Gasdiffusionselektroden sind vielseitig einsetzbar. Nur als Beispiele seien hier die Wasserstoffdiffusionsanode in der Zink-, Nickel- oder Eisenelektrolyse genannt. Bei der Zinkelektrolyse mit einer Aluminiumkathode ist bei einer Wasserstoffdiffusionsanode eine Zellenspannung von nur 1,6 Volt nötig, wogegen mit einer konventionellen Anode mit 3,3 Volt Zellenspannung gearbeitet wird. Sauerstoffdiffusionskathoden können z.B. bei der Oxidation von Metall-lonen eingesetzt werden.

In den nachfolgenden Beispielen wird im Labormaßstab gearbeitet.

### Beispiel 1

Herstellung einer ersten Membran: In 233 g NMP als Lösungsmittel werden 70 g Kationenaustauscherpulver K1481 (Bayer AG), 5 g Ruß und 25 g PHD suspendiert. Die Suspension wird auf ein Vlies aus Polyphenylensulfid (PPS) aufgetragen und bei 100°C 2 Stunden lang im Trockenschrank getrocknet. Die Beschichtung und Trocknung wird ein zweites Mal wiederholt. Die so hergestellte Membran hat eine Dicke von 50 bis 60 um.

Die Gasdichtigkeit der Membran wird in einer Standard-Testzelle überprüft. Zuvor wird die Membran mit 20 %iger Schwefelsäure benetzt. Beim Test bleibt die Membran bis zu einem Druck von 2,8 bar gasdicht.

Herstellen des Klebeverbundes zwischen der ersten Membran und einem Kohlefasertuch: Die Membran wird mit der Gassperrschicht auf die Seite eines Kohlefasertuches gebracht, die mit Ruß und Platinkatalysator beschichtet ist. Das Kohlefasertuch hat eine Dicke von 1,5 mm. Als Kleber wird eine Suspension aus 70 g Kationenaustauscherpulver K1481, 5 g Ruß und 25 g PHD in 200 g NMP hergestellt. Der Kleber wird mit einer Schichtdicke von etwa 100 um auf die rußbeschichtete Seite des Kohlefasertuchs aufgetragen. Die erste Membran wird auf die mit Klebstoff versehene Seite des Kohlefasertuchs gepreßt und nach einer Trocknung von 6 Stunden bei 100°C hat sich die Gassperrschicht der Membran mit der ausgehärteten Klebeschicht verbunden.

Herstellung der Wasserstoffdiffusionselektrode: Auf eine Bleiplatte mit der Stärke von 1 cm und einer Fläche von 11 x 15 cm wird die Verbundschicht aus erster Membran und Kohlefasertuch aufgeklebt. Die Bleiplatte weist ein Kanalsystem zum Verteilen von Wasserstoff in das aufgeklebte, mit der Membran beschichtete Kohlefasertuch auf. Ein elektrisch leitender, Kohlenstoff enthaltender Klebstoff (Hersteller Mavidon, Palm City, Florida, USA) verbindet die Bleiplatte mit dem Kohlefasertuch.

Elektrochemischer Test: Die wie vorstehend beschrieben angefertigte Wasserstoffdiffusionselektrode hat eine effektive Elektrodenfläche von 90 cm². Die Elektrode wird in einen Elektrolyten getaucht, wie man ihn bei der elektrolytischen Zinkgewinnung benutzt. Der Elektrolyt besteht zu 20 Gew.% aus Schwefelsäure und zu 50 Gew.% aus Zink (als Zinksulfat). Im Abstand von 2 cm von der Wasserstoffdiffusionsanode wird eine AluminiumKathode in den Elektrolyten gehängt. Die Anode wird pro Stunde mit 0,1 1 Wasserstoff versorgt. Bei 40 _{°} C stellt sich im stromlosen Zustand ein Halbzellenpotential, bezogen auf eine Normal-Wasserstoffelektrode, von + 0,05 Volt ± 0,01 Volt ein. Nach dem Einschalten eines Stromes von 3,6 Ampere, was einer Strombelastung der Anode von 400 Ampere pro m² entspricht, wird ein Halbzellenpotential, bezogen auf eine Normal-Wasserstoffelektrode, von 0,35 Volt erhalten. Dies entspricht einer Zellenspannung von 1,3 Volt. Mit diesen Bedingungen wird die Labor-Elektrolyse über eine Betriebszeit von 1500 Stunden betrieben.

### Beispiel 2

Eine zweite Membran wird folgendermaßen hergestellt: Als Lösungsmittel dienen 233 g Dimethylacetamid (DMA), in dem man 70 g Kationenaustauscherpulver K1481, 4 g Ruß, 1 g hochdisperse Kieselsäure und 25 g PVDF suspendiert. Im übrigen arbeitet man genauso wie mit der ersten Membran. Im Drucktest zeigt sich, daß die zweite Membran bis zu einem Druck von 2,0 bar gasdicht bleibt.

Herstellung des Klebeverbundes zwischen der zweiten Membran und dem Kohlefasertuch: Die Verklebung der Gassperrschicht der Membran mit dem Kohlefasertuch erfolgt wie im Beispiel 1 zusammen mit der ersten Membran erläutert. Abweichend davon wird die Klebeschicht als Suspension von 70 g Kationenaustauscherpulver K1481 mit 5 g Ruß und 25 g PVDF (Dyflor 2000 von Hüls AG) in 200 g DMA auf die rußbeschichtete Seite des Kohlefasertuches aufgetragen, wobei man in die noch nicht ausgehärtete Klebeschicht ein dünnes Glasfaservlies (Microlith SAB 0,25 von Schuler GmbH, Wertheim) einwalzt. Die Klebeschicht mit Glasfaservlies hat ausgehärtet eine Dicke von 0,2 bis 0,25 mm. Die zweite Membran wird mit der Gassperrschicht auf das Kohlefasertuch gepreßt und nach einer Trocknung von 6 Stunden bei 100°C ist ein fester Verbund hergestellt.

Die Herstellung der Elektrode erfolgt wie im Beispiel 1. Die Elektrode mit der zweiten Membran unterscheidet sich von der Elektrode mit der ersten Membran erst beim Betrieb mit 3,6 Ampere (entsprechend 400 Ampere pro m²). Gegen die Normal-Wasserstoffelektrode wird ein Halbzellenpotential von 0,55 Volt gemessen, wobei die Zellenspannung 1,5 Volt beträgt. Es wird der im Beispiel 1 beschriebene elektrochemische Test erfolgreich durchgeführt und während einer Betriebszeit von mehr als 4000 Stunden getestet.

## Patentansprüche

1. Membran zum Abdecken der einem flüssigen Elektrolyten zugewandten Außenseite einer Gasdiffusionselektrode, wobei die Membran gasundurchlässig und wasseraufnahmefähig ist und eine textile Trägerschicht aufweist, dadurch gekennzeichnet, daß mit der textilen Trägerschicht mindestens eine Gassperrschicht verbunden ist, die lonenaustauschermaterial und Bindersubstanz im Gewichtsverhältnis von 10:1 bis 1:2 enthält.

2. Membran nach Anspruch 1, dadurch gekennzeichnet, daß das lonenaustauschermaterial Kationenaustauscheigenschaften besitzt.

3. Membran nach Anspruch 1, dadurch gekennzeichnet, daß das lonenaustauschermaterial Anionenaustauscheigenschaften besitzt.

4. Membran nach Anspruch 1 oder einem der folgenden, dadurch gekennzeichnet, daß die Bindersubstanz aushärtbar ist.

5. Membran nach Anspruch 4, dadurch gekennzeichnet, daß die Bindersubstanz hauptsächlich mindestens einen der Stoffe Polyvinylidendifluorid (PVDF), Polyhydantoin (PHD) oder Polysulfon enthält.

6. Membran nach Anspruch 1 oder einem der folgenden, dadurch gekennzeichnet, daß die Bindersubstanz Ruß mit einem Gewichtsanteil von 1 bis 20 Gew.% enthält.

7. Membran nach Anspruch 1 oder einem der folgenden, dadurch gekennzeichnet, daß die Bindersubstanz feinteiliges Si0₂ mit einem Gewichtsanteil von 0,5 bis 7 Gew.% enthält.

8. Membran nach Anspruch 1 oder einem der folgenden, dadurch gekennzeichnet, daß die Gassperrschicht Polymerfasern oder Glasfasern enthält.

9. Membran nach Anspruch 1 oder einem der folgenden, dadurch gekennzeichnet, daß die textile Trägerschicht aus einem Vlies besteht.

10. Verfahren zur Herstellung einer Membran zum Abdecken der einem flüssigen Elektrolyten zugewandten Außenseite einer Gasdiffusionselektrode, wobei die Membran gasundurchlässig und wasseraufnahmefähig ist und eine textile Trägerschicht aufweist, dadurch gekennzeichnet, daß man auf die textile Trägerschicht eine lösungsmittelhaltige Bindersubstanz als Klebeschicht und darauf mindestens eine Gassperrschicht aufbringt, wobei die Gassperrschicht aus lonenaustauschermaterial und Bindersubstanz im Gewichtsverhältnis von 10:1 bis 1:2 besteht.

11. Gasdiffusionselektrode für Elektrolysevorrichtungen, mit einer Membran zum Abdecken der einem flüssigen Elektrolyten zugewandten Außenseite der Gasdiffusionselektrode, wobei die Membran gasundurchlässig und wasseraufnahmefähig ist, eine textile Trägerschicht aufweist und mit einem elektrisch leitenden Elektrodenkörper verbunden ist, der eine Gasverteilvorrichtung aufweist, dadurch gekennzeichnet, daß mit der textilen Trägerschicht der Membran mindestens eine Gassperrschicht verbunden ist, die lonenaustauschermaterial und Bindersubstanz im Gewichtsverhältnis von 10:1 bis 1:2 enthält.

12. Gasdiffusionselektrode nach Anspruch 11, dadurch gekennzeichnet, daß der Elektrodenkörper eine kohlenstoffhaltige, elektrisch leitende Schicht aufweist.

13. Gasdiffusionselektrode nach Anspruch 12, dadurch gekennzeichnet, daß die kohlenstoffhaltige Schicht ein Kohlefasertuch aufweist.
